# EUROPEAN PATENT SPECIFICATION

(11) **EP 4 405 228 B1**
(45) Date of publication and mention of the grant of the patent: **14.01.2026**
(21) Application number: 22793779.4
(22) Date of filing: 20.09.2022
(51) Int. Cl.: B61F 3/04

(54) **A BOGIE AND A VEHICLE WITH SUCH BOGIE**
DREHGESTELL UND FAHRZEUG MIT SOLCH EINEM DREHGESTELL
BOGIE ET VÉHICULE ÉQUIPÉ D'UN TEL BOGIE

(30) Priority: 20.09.2021 GB 202113401
(43) Date of publication of application: 31.07.2024
(60) Divisional application: 25219590.4
(73) Proprietor: VLR Technologies Limited, Stratford-Upon-Avon, Warwickshire CV37 6QB (GB)
(72) Inventor: HOWSON, Adrian, Stratford-Upon-Avon, Warwickshire CV37 6QB (GB); O'BRIEN, Shaun, Stratford-Upon-Avon, Warwickshire CV37 6QB (GB); SALKELD, Paul, Stratford-Upon-Avon, Warwickshire CV37 6QB (GB)
(74) Representative: IP Place Limited
(86) International application number: PCT/GB2022/052374
(87) International publication number: WO 2023/041943

(56) References cited:
- EP-A1- 0 025 484
- CN-A- 109 878 545
- DE-C- 898 005
- FR-A- 1 202 957
- FR-A- 521 347

## Description

This specification relates to improvements in and relating to light mass transit vehicles. In particular, this specification relates to a bogie for a light mass transit vehicle. Further, it is a non-exclusive object of this specification to provide a bogie which may be more space and energy efficient, stable and/or durable along with allow self-driven movement, geo-positioning and LIDAR for absolute and relative positioning as well as collision avoidance.

Light mass transit vehicles (including light rail and road vehicles and very light rail and road vehicles) are typically designed to be reduced-weight versions of mainline (heavy) mass transit vehicles and travel with a lower payload and at lower speeds.

A bogie (sometimes known as a truck) typically provides a tractive force to move a vehicle body. Generally, a bogie includes at least a chassis or framework carrying a wheelset and powered by an actuator, for example a combustion engine and/or electric motor, see for example the prior art disclosed by FR 1 202 957 A.

Requirements of a bogie further include supporting the vehicle body, providing stability of the vehicle body, and countering noise, vibration and harshness (NVH) acting on the vehicle body.

These components are typically high-mass (and high-weight) components packaged densely within a bogie frame. It is desirable to provide isolation of functional parts from NVH and/or damage while maintaining a strong, supporting, balanced and energy efficient bogie. Further, particularly for light mass transit vehicles, a reduction in size and weight of a bogie is desirable compared with known heavy mass transit vehicle bogies.

There is, therefore, a need to provide a bogie for a light mass transit vehicle which alleviates one or more problems associated with the prior art.

Accordingly, a first aspect provides a bogie according to claim 1. The vehicle may be a mass transit vehicle or a freight vehicle formed by one or more bogies.

The flexible coupling may comprise a drive shaft of a flexible connection portion connecting the actuator and the transmission.

The transmission may be mounted to the first portion such as a transverse member such as a bolster beam.

The transmission may be mounted along an axial axis of the wheel axle.

The transmission may be mounted centrally between two of the two or more wheels.

The bogie further includes a brake assembly.

The brake assembly may be mounted along an axial axis of the wheel axle.

The second portion of the bogie support frame may include an electrical induction brake.

The first portion may be above the suspension system.

The bogie may further include one or more small object deflectors.

The bogie may further include an electrical sensor for monitoring height of the first portion of the bogie relative to a first surface.

A controller may monitor and actuate the suspension system to automatically adjust the height of the first portion of the bogie to a predetermined height relative to the first surface.

A second aspect includes a vehicle including two or more of the bogies. The vehicle can be formed by each bogie or the bogies are secured to a freight container and/or a passenger cabin.

Further in accordance with aspect of the present invention there is provided a bogie which is independently operatable and controlled.

The bogie may have means for geo-positional determination and control. The bogie may have means for LIDAR ranging and positioning relative to the vehicle and/or other bogie along with collision avoidance.

Embodiments of the bogie are described, by way of example, with reference to the accompanying drawings, in which:
Figure 1 shows a light mass transit vehicle including a bogie;
Figure 2 shows a bogie;
Figure 3 shows an actuator, transmission, brake and wheelset assembly;
Figure 4 shows an actuator and brake assembly;

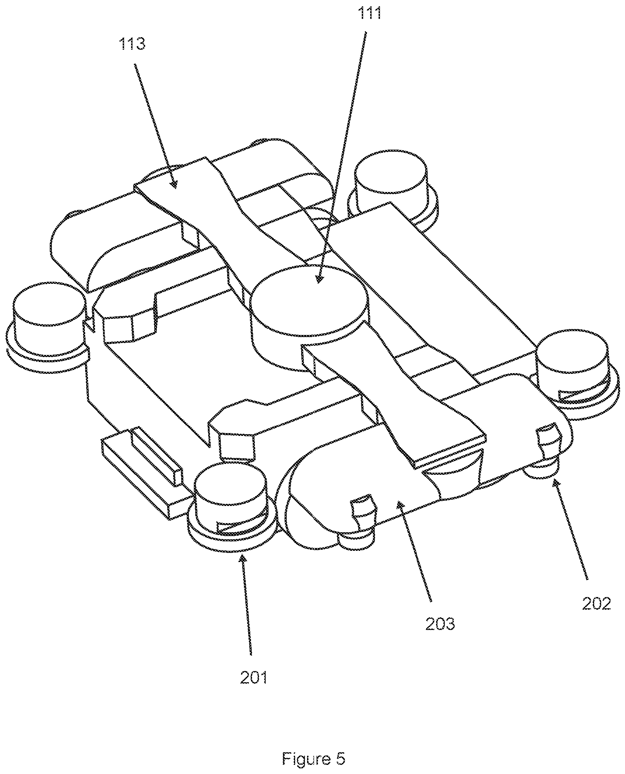

Figure 5 shows a bogie;
Figure 6 provides a side view of a freight vehicle in accordance with aspects of the present invention with two bogies associated with a container;
Figure 7 provides a side perspective view of the vehicle depicted in figure 7 vehicle and figure 7c a front view of a vehicle all in accordance with aspects of the present invention;
Figure 8 is a schematic illustration of a potential control regime for a vehicle to avoid hitting a hazard:
Figure 9 a further schematic illustration of further control features;
Figure 10 is a plan view of a bogie or freight skate in accordance with aspects of the present invention;
Figure 11 is an exploded view of the bogie or freight skate shown in figure 10;
Figure 12 is a front perspective view of the bogie or skate depicted in figure 10 and figure 11; and
Figure 13 is a schematic illustration of a bogie used as freight skate.

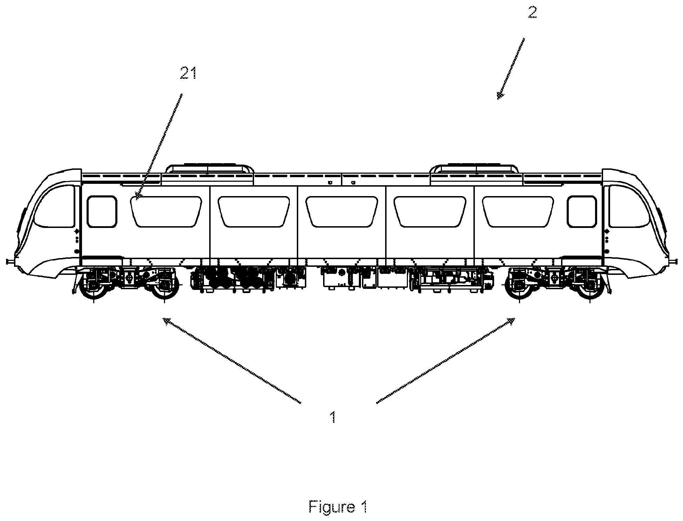

Referring firstly to figure 1, there is shown a bogie (1) for a light mass transit vehicle (2). The bogie (1) may be mounted to an underside of a vehicle body (21) of the light mass transit vehicle (2). This may be advantageous to provide a tractive force to the vehicle body (21).

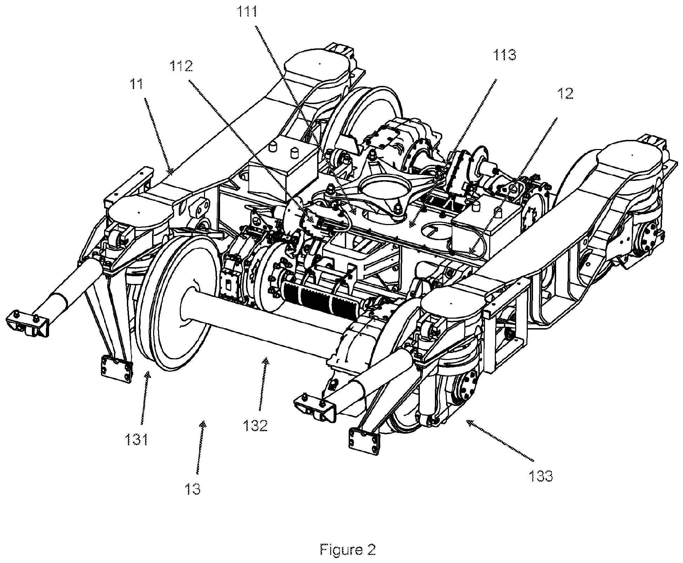

Referring to figure 2, The bogie (1) includes a bogie support frame (11). The bogie support frame (11) includes a first portion (111) and a second portion (112). The first portion (111) is mountable to the light mass transit vehicle body (21). The first portion (111) may be pivotally mountable to the light mass transit vehicle body (21). A slewing bearing may provide the pivotable movement. This may be advantageous to provide rotational movement between the bogie and vehicle body, improving stability and durability of the bogie when moving around curves in a trajectory.

The bogie (1) further includes a suspension system (12) connecting the first portion (111) and second portion (112). The suspension system (12) may include air springs. The air springs may connect the first portion (111) and the second portion (112). Air springs may provide the lowest eigen frequency. This may be advantageous to reduce noise, vibration and harshness, and stability, of the vehicle body.

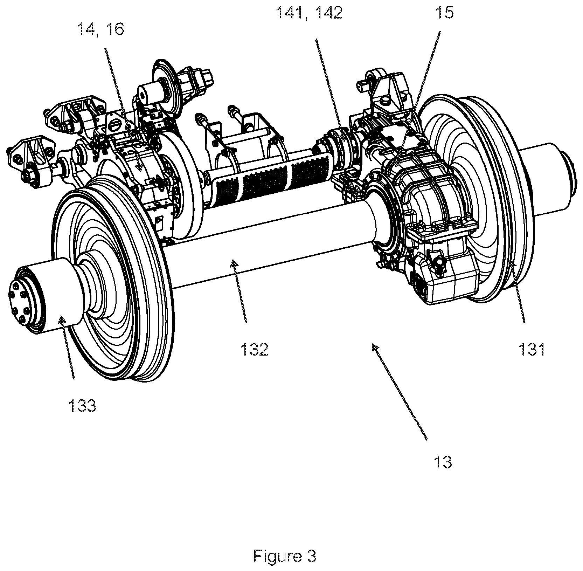

Now referring to figure 3, the bogie (1) further includes at least one wheelset (13). The wheelset (13) is mounted on the second portion (112) of the bogie support frame (11). The wheelset (13) may be soft-mounted on the bogie support frame (11) to allow minor movement of the wheelset (13) relative to the bogie support frame (11) when in use. This may be advantageous for improved curving with less wear.

Each wheelset (13) includes two or more wheels (131). The two or more wheels (131) are mounted on a wheel axle (132). The two or more wheels (131) may be resilient wheels. This may be advantageous to reduce NVH through the wheels. The two or more wheels (131) may each include a tyre. The wheel axle (132) may be mounted on the bogie support frame (11) via axle bearings (133). An axle bearing (133) may be included for each wheel (131). The bogie (1) may include two wheel sets (13), totalling two wheel axles and four wheels. This may be advantageous to drive the bogie in two directions and increase the stability of the bogie.

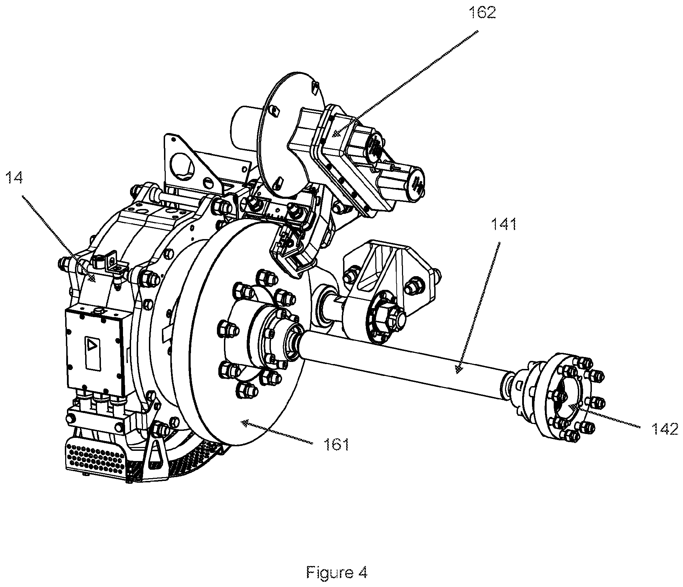

Now referring to figure 4, the bogie (1) further includes an actuator (14). The actuator (14) is for providing torque to the two or more wheels (131). The bogie (1) may include one actuator (14) per wheel set. Further, the bogie (1) may further include one actuator per wheel (131). The actuator may be, for example, an electric motor. In particular, the electric motor may be a DC brushless electric motor. This may be advantageous to provide a more energy efficient bogie.

Referring to figures 3 and 4, the actuator (14) may be coupled directly to a transmission (15). This may be advantageous to reduce mechanical losses and a more efficient bogie. The coupling may include a drive shaft (141). The coupling may include a flexible coupling portion (142). The flexible coupling portion (142) may be coupled to the transmission (15).

The transmission (15) may be coupled directly to the wheel axle (132), thereby providing means for transmitting torque from the actuator (14) to the two or more wheels (131). This may be further advantageous to reduce mechanical losses and provide a more efficient bogie. The transmission (15) may be mounted centrally between two of the two or more wheels (131). This may be advantageous to balance the bogie and provide a more stable bogie. The transmission (15) may include a locked differential. This may be advantageous to rotate each wheel on a wheel axle at different speeds. The transmission (15) may provide a gear ratio reduction (from actuator (14) to wheel axle (132)) using gear combinations known in the art. The transmission (15) may be mounted above the suspension system (12). This may be advantageous to reduce NVH to the vehicle body, and provide a more stable bogie.

The wheel axle (132) may be a shaft of circular cross section. The shaft may be hollow or sold or partially solid. The shaft may define an axial axis and radial axis. The transmission (15) may be mounted along the axial axis of the wheel axle (132). This may be advantageous to be space efficient within the bogie.

The bogie (1) may further include a brake assembly (16). The brake assembly (16) may be mounted along an axial axis of the wheel axle (132). This may be advantageous to be space efficient within the bogie. The brake assembly (16) may include a brake disc (161). The brake disc (161) may be fixed to the drive shaft (141) or wheel axle (132). The brake disc (161) may be low noise and ventilated. This may be advantageous to provide cooling to the brake disc and reduce NVH to the vehicle body. The brake assembly (16) may further include electrically operated brake callipers (162). The brake callipers (162) may be operated remotely away from the brake assembly (16).

The bogie (1) may include one brake assembly (16) per wheel axle (132) or one brake assembly (160) per actuator (14). Further, the brake assembly (16) may include a friction brake. The second portion of the bogie support frame (112) may include an electrical induction brake.

The transmission (15) may be mounted above the wheel axle (132) and the drive shaft (141). This may provide an advantage that the brake assembly may be mounted on the wheel axle (rather than on the actuator) and avoid high NVH levels through to the vehicle body. This may require a dropped wheel axle (132) to take all loads between the two or more wheels (131) (that otherwise in a conventional solid axle arrangement is taken up by the wheel axle itself).

Accordingly, the drive shaft (141) may only be required to withstand the torque from traction and braking. This may provide the advantage of reducing the overall unsuspended mass (and weight), thereby providing a more space efficient, stable and/or durable bogie.

Now referring to 5 and figure 2, the first portion (111) of the bogie support frame (11) is a first portion of the support frame and can take the form of a transverse member or a bolster beam (113). The first portion may allow the second portion (112) to move freely in a pitch and absorb torque in a roll. The actuator (14) is mounted to the first portion (113). Further, the transmission (15) and/or brake assembly (16) may be mounted to the first portion (113). The the first portion (113) may be above the suspension system (12). This may be advantageous as with equipment mounted above the suspension system, the the first portion may provide load carrying and mounting for functional equipment, for example the actuator, transmission and/or brake assembly. This may further provide the advantage of eliminating the need for actuator cabling, encoders, cooling, hydraulic hoses for brakes, and the like, to be routed from the bogie to the vehicle body. This may further provide the advantage that the propulsion equipment is isolated from the wheel/ground interface and any significant NVH. The first portion (113) may be a shaft of circular cross section. The first portion (131) may be a hollow or sold or partially solid shaft. This may provide the advantage of high strength, low weight and easier production. The the first portion (113) may include an air bag at each end to provide a secondary suspension system. Each air bag may be height-adjustable for different vehicle loads. The first portionis a portion of the frame and generally transverse rather than longitudinal in the suspension frame so rendering it easier to fit the drive (motors, battery etc.) within the bogie.

The wheelset (13) may include an inter-wheel frame. The inter-wheel frame may span from a fist wheel (131) to a second wheel (131) and cover the wheel axle (132). Further, the inter-wheel frame may cover any equipment mounted on the wheel axle (132). This may be advantageous to protect equipment mounted on the wheel axle and provide a more durable and stable bogie.

The bogie (1) may further include one or more small object deflectors. A small object deflector may be provided for each wheel (131). This may be advantageous to remove objects in the path of the two or more wheels.

The bogie (1) may further include an electrical sensor. The electrical sensor may be a displacement sensor. Examples of sensors are optical and/or linear variable differential transformer (LVDT) sensors. The electrical sensor may be for monitoring height of the first portion (111) of the bogie (1) relative to a first surface. The first surface may be the ground and/or a platform. This may be advantageous by providing a more stable bogie.

The bogie (1) may include a controller. The controller may include executable instructions that may monitor and actuate the suspension system to automatically adjust the height of the first portion (111) of the bogie (1) to a predetermined height relative to the first surface. This may be advantageous to automatically adjust the floor height of the vehicle body between full load and partial load and no load.

The bogie (1) may include one or more guide wheels (201). Preferably, the bogie (1) includes four guide wheels (201). One guide wheel (201) may be mounted at each corner of the bogie (1). This may be advantageous for the guide wheels to act as a buffer to the whole bogie (1) and keep the wheels (131) on a track. The guide wheels (201) may be in continuous contact with a guide rail. The guide rail may guide a direction of the bogie (1) and vehicle (2). The guide wheels (201) may be mounted on the bogie support frame (11) via resilient elastic members, for example, springs. This may be advantageous to aid the continuous contact and reduce shock forces reaching the bogie support frame. The resilient elastic member may have an adjustable spring force such that when less buffering is needed (for example, on a straight section of track) the spring force is lowered.

The bogie (1) may include a switch wheel (202). The switch wheel (202) may be mounted on the bogie support frame (11). One or more switch wheels (202) may be included. The switch wheel (202) may be positioned outermost on the bogie support frame (11). The switch wheel (202) may move vertically to engage a track switch. A pneumatic switch wheel mechanism (203) may be used to move the switch wheel (202).

The bogie can incorporate an unconventional drive system mounting arrangement. The assembly is done in a simplified manner relying on a dampened pivoting control arm that is mounted to the transverse mounting pad or a first portion (111) and optionally a second portion (112) connecting both sides of the bogie. This also incorporates the mounting arm and damper for the gearbox. The transverse arrangement condenses the space required for the incorporation of the drive, including the brake set up. The advantage being the reduced size and weight of the overall system, serviceability of the system (clear space and ease of part assembly) and the potential if required to increase the power with a larger (wider) motor. The footprint of the mounting arrangement also giving a potential feature to add anti-vibration for certain ruggish applications.

Preferably, a transverse member, for example a bolster beam can be adapted as a first portion of the frame for the necessary equipment for drive, control and positioning to be configured and packaged onto the bogie.

A light mass transit vehicle (2) may include two or more bogies (1). This may be advantageous to provide more tractive force for a vehicle body (21). A first bogie (1) may be mounted at a first end of the vehicle body (21) and a second bogie (1) may be mounted at a second end of the vehicle body (21). This may be advantageous to provide a more stable and balanced vehicle body, and providing a suitable turning curve.

It will be appreciated that bogies in accordance with aspects of the present invention can be independent self-driving units to allow movement forwards and backwards. The bogies can operate autonomously and automatically in that each bogie has means for location, both geographically and relatively to other bogies and parts of the vehicle as well as to avoid collisions. In such circumstances each bogie can act as a skate upon which a freight container can be secured to act as a structural connection between skates to form a vehicle which can move along rails or with appropriately steerable wheels separately or a combination of both with separate wheels for use away from rails and flanged wheels for use with rails.

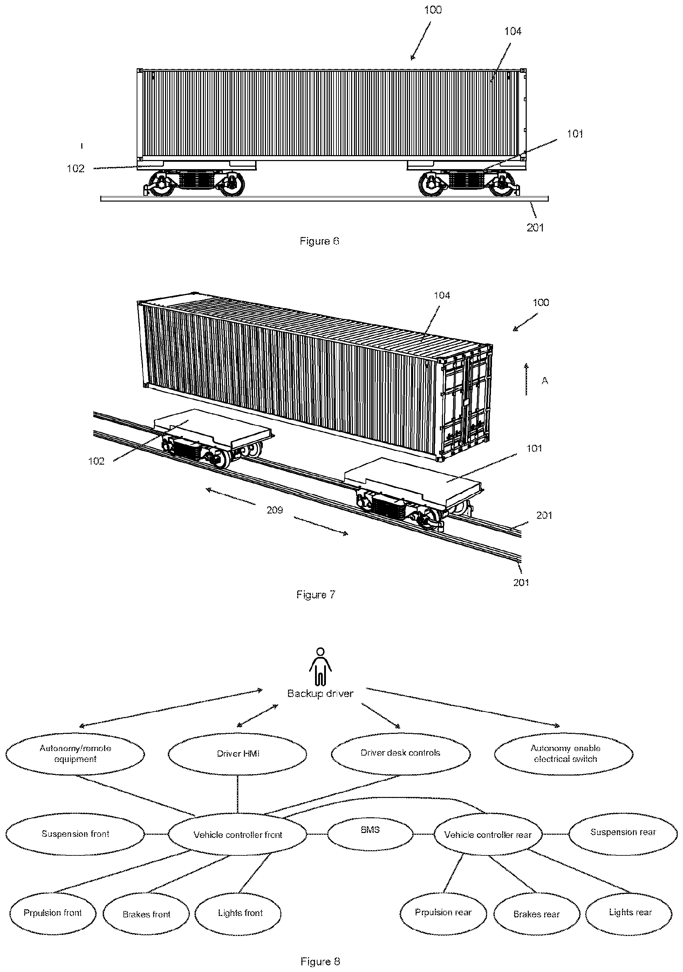

Typically, as illustrated in Figure 6 a bogie or skate can be secured at each end of a container. As will be known standard ISO containers are provided in standard sizes so the bogies can automatically position themselves, typically on rails, at appropriate spacing using geo-positioning techniques (GPS) to allow the container to be placed upon the bogies. It will be understood that GPS is relatively accurate but possible not sufficient to allow alignment of fastening in the bogie and the container so more accurate techniques may be used such as LIDAR (light detection and ranging) for finer relative positioning of the bogies and the container in use.

The bogies will have their own control functions in the form of a processor or black box to control movement as well as positioning. The processor will have instructions for movement either under remote control or as destination objectives or for achieving train combinations. The processor will also act upon the positioning (geographical, relative and dimensional) to allow attachment of the container. As indicated it will be necessary to know the geographical position of the or each bogie so that the container or other vehicle assemblies can be first attached and then moved between such geographical locations. It will also be understood that the container or other vehicle assemblies may themselves be manufactured or positioned with some degree of error, for example the ground upon which the bogies are positioned may not be absolutely level or the fastenings slightly distorted so that the controller will then be able to adjust typically through an active suspension system the height and/or presentation angle of the connector surface of the bogie to the container or vehicle part to accommodate height variations. It will be understood once the container and bogie are robustly connected and secured such slight variations will be also accommodated by dynamic control by the processor in terms of a multitude of potential actions dependent upon how complex a control regime is required. For example, as the bogie moves curves in the parallel rails may with a substantially rigid container cause lateral stressing which the processor can accommodate as described above by turning slightly bogie wheels as well as adjustment of the connections between the bogie and container.

Furthermore, such control techniques can have an auto learning function in that normally several container and bogies as skates under each end of the container will be combined as units into a longer train combination which in some circumstances may be several hundred metres or even longer in length so that the bogies through their controller can communicate such that subsequent units (bogies and containers) will be aware of previous units actions in terms of curves in the track as well as 'bumpy' sections in the track so that the bogies can be configured in terms of suspension responses. In such circumstances, freight which is more fragile may be located towards the rear of the train combination so that the bogies via their suspension systems can absorb more shocks or in situations with mixed freight and passenger units the suspension ride can be dynamically adjusted accordingly. In any event with a black box controller any incidents or information with regard to the condition of the rails can be reported to a central maintenance function to be further investigated. The LIDAR function, if included may also allow for some form of rail surveying including with regard to tunnel walling in terms of variations in clearance etc.

With bogies of the type described above with regard to figure 6 it will be understood that each bogie as indicated can be independently moved, whether autonomously with sensors and control regimes or remotely by a controller at a central location, so bogies secured to individual separate bogies or combinations of bogies and containers can be effectively shunted. A desired train combination in terms of units of bogies and containers/passenger carriages can then be uploaded and a central processor then determines how best to configure that desired train combination in a marshalling yard by moving individual or combinations with or without containers as required and utilising lift mechanisms if needed without the need or added complexity of using shunting engines and tractor units in the space available.

Figure 6 illustrates a vehicle 100 in which two bogies 101, 102 are secured to a container 103 which is normally of a standard ISO size. The bogies 101, 102 and the container 103 are secured by typical latches or similar fasteners. The bogies 101, 102 are positioned as described above with GPS and/or LIDAR or similar mechanisms and systems so that the latches or fastener elements in the bogie and container are appropriately positioned and so secured together.

The bogies 101, 102 can be independently moved forwards and back for local shunting or desired journeys.

As will be understood with a bogie to be used as a freight skate, it is more than desirable that the bogie has the ability to position the bogie within a centimetre or two of a reference marker and/or a partner bogie so that it matches with an autonomous loading crane and/or so ISO container if used.

There will be an autonomous retaining system in most advantageous embodiments of aspects of the invention, which engages the corner blocks or retracts when not needed. For example, a 10ft container will need all four locators on a 10ft frame (the default dimension of the bogie support frame, just a bit bigger than, for example the LN25 bogie). In the dual bogie situation for longer containers there will be a need these locators to retract and a central pair to appear so that the container is located across two bogies.

Figure 7 provides an illustration of the vehicle 100 depicted in figure 6 with the container 104 above the bogies or freight skates 101, 102. The position is with the container lifted by a lift not shown in the direction A by a lift not shown. In such circumstances it can be appreciated that positioning of the bogies is important in terms of geographic position as well as to allow the container 104 to be secured to the bogies 101, 102 hence the use of GPS, LIDAR and other techniques for macro and micro positioning as required.

In accordance with aspects of the present invention substantially independent bogies 101, 102 are accurately positioned with a spacing 209. The bogies 101, 102 normally on the rails 201 can be independently driven (at least forwards and rearwards) for initial geographic positioning then more minute positioning for locking mechanisms In such circumstances, the bogies 101, 102 and in particular the power train (drive motors, batteries etc.) in the bogies 101, 102 can be charged in situ as required or the container 104 lifted in the direction of arrowhead A by a lift (not shown) so that depleted or nearly spent bogies are removed for recharging, maintenance and as required. Replacement bogies can then be located below the container 104 and the container lowered on to the replacement bogies so that the vehicle can rapidly return to use.

With regard to an autonomous bogie it will be appreciated that in addition to packaging of the components within a bogie frame envelope is to provide three elements, namely macro positioning to provided a base geographical location for the bogie, micro positioning to allow loading and placing of containers or for reliability with auto loader mechanisms and dynamic.

As indicated above to enable such movement each bogie or at least some of the bogies will have a number of features such as LIDAR mounted externally to vehicle on special brackets or mounted through a side of the vehicle possibly via 'cut out' access holes; RADAR sensor ideally mounted behind bumper of the vehicle although it is possible to provide a sensor which will 'see' through parts of the vehicle. There may further comprise means to isolate autonomy mode of the vehicle when not required. Although the vehicle will operate mostly in an autonomous state there will be an on board or remote safety driver. Potentially, it is envisaged that the autonomy control is used with standard or bespoke control processes and steps compatible with other vehicles for network control for each vehicle in automonous control and/or in manual drive.

Vehicle software will be used to manage speed, braking etc. Speed signal will be supplied by autonomy software. Generally, GPS, triangulation of radio or other beams and dead reckoning by measuring movement from a known marker can be reasonably accurate but not sufficiently to allow accurate enough location for fastenings between the bogie and the other parts of the vehicle such as a passenger cabin or container so more accurate processes can then be used including LIDAR or similarly accurate processes/system to around 1cm accuracy. It will also be understood that mechanical means such as tapered or funnel alignment openings to draw the fastening components together into alignment and/or more sophisticated docking software to control small movement of the or each bogie into sufficient alignment for coupling and fastening could be used.

The sensors used for GPS, RADAR, LIDAR as well as image cameras could also be used for dynamic control of the vehicle and bogies in motion to stop collisions with other vehicles/bogies as well as fixed objects, pedestrians, cyclists and other potential hazards.

Figure 8 show a schematic of a control regime 800. The regime 800 as illustrated has a number of elements for features on the vehicle and particularly the bogies or freight skates to avoid collisions, so vehicles and particularly bogies can communicate with each other and processes for movement in use with a backup driver generally at a remote location.

A self-powered bogie used as a skate can initially be controlled by an operator using a remote control. The functions the bogie must include are as follows:
1. Move forward/back and stop under the control of the operator;
2. Stop at a designated grid point from instruction of the operator's remote control;
3. Stop within a given distance (for example 30 cm, 3 metres' and 5metres) from a static object;
4. Have an anti-collision system in clear, foggy and wet weather
5. Recognise at a given battery charge percentage that it needs to recharge, advise the operator and once released return to a given point (a charger location);
6. Typically carry a 3 metre (ISO 10 foot) container upon a single bogie or skate and with a second bogie or skate carry a bigger 6 metre and 12 metre (ISO 20' and ISO40') container with a 25 ton load with adjustable container location points required and if automatically controlled means such as GPS and LIDAR and other systems to provide correct location and relative positioning to enable the container to be loaded to define a 'vehicle' unit with the bogies;
7. A tracking system to alert its position to the operator;
8. To follow a moving object such as another vehicle or combination of container and bogies at a set distance apart as a road train combination or a train locomotive set in use.

A self- driving vehicle comprising two or more bogies will ideally enable positioning between bogies which is managed autonomously. The main features are:

### Hardware installation

- LIDAR mounted externally to vehicle on special brackets OR mounted to the side to vehicle;
- RADAR sensor ideally mounted behind the front and rear bumper so sensor will 'see' through the bumper.

### Software installation

- A 'key operated' on/off for the autonomy system to guarantee no interference when vehicle is under remote driver control.
- ECU location
- Link to cameras

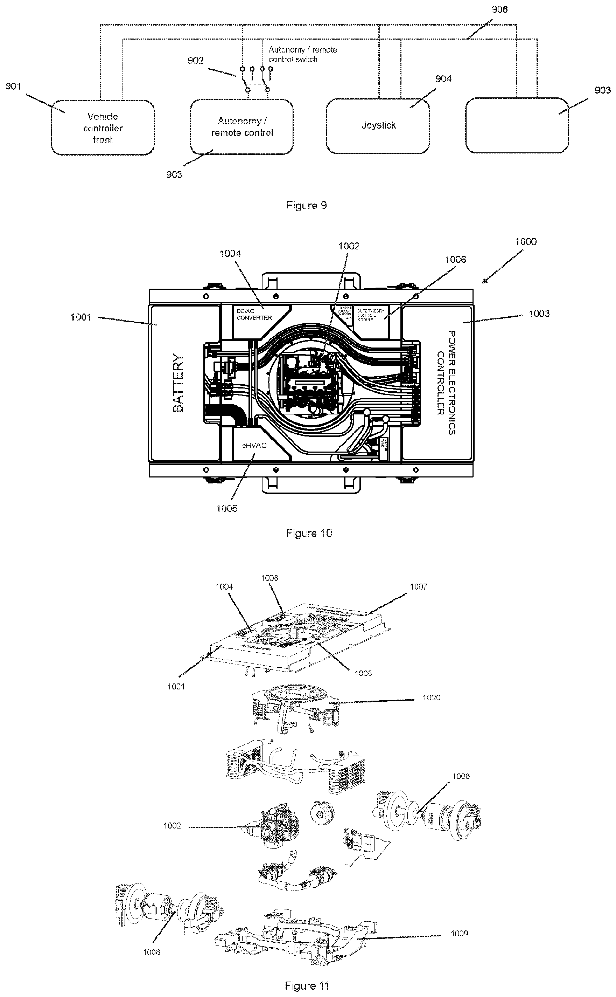

Figure 9 shows further control features for the remote driver as outlined above with various elements such as vehicle controller 901, a switch 902 from autonomy/remote control 903, a remote driver joystick 904 all on a wired loop 906 for a driver to control the vehicle remotely.

In one class of embodiments, a bogie is used which is motorised and reduced in weight incorporating asemi-suspended lightweight axial flux PM motor; IGW gearbox; electric-over spring emergency and parking brake; and lightweight wheelsets with hollow axles.

The propulsion system will be modular and adaptable and includes the option of a battery power pack incorporating one of more LTO batteries or NMC batteries. To optimise the duty cycle, a simple, safe fast charging system that sits between the rails in a designated charging bays can be used.

The bogie incorporates on-board battery monitoring and charge scheduling Range could be 100km between charging depending on environment, battery and load. Battery choice will require a study of the daily operations within the freight terminal. With the automated charging system in theory, bogie could work on a 24-hour duty cycle, with charging breaks in between with optimum battery size and charging times. Furthermore this will enable calculation of the number of bogies or skates that will be required depending on the size of terminal and number of containers that pass through the facility.

The use of a bogie as a freight skate is a concept based around self-powered lightweight bogie. The light weight beneficially reduces wheel and rail damage in addition to noise reduction, and prolongs the battery duty cycle. Four-wheel drive assists with rail adhesion. The weight of the containers will also provide extra traction.

In view of the above the self-driving bogie or skate will, preferably, have the following main components installed into the underframe as follows:
(i) Motor and transmission
(ii) Running gear (wheel-set, brakes and suspension)
(iii) Couplers
(iv) Motor inverter
(v) Batteries - energy storage
(vi) Batteries - low voltage system
(vii) Battery management system (for energy storage batteries)
(viii) Battery charger (low voltage system)
(ix) Auxiliary inverter and distribution (3-phase 400V / 1-phase 230V ; as required)
(x) High voltage switchgear and distribution
(xi) Cooling equipment (if water cooled motor and power electronics are employed)
(xii) Brake Control Unit
(xiii) Air reservoirs
(xiv) Pneumatic control box (for suspension etc.)
(xv) Controls and communication

Figures 10 to 12 illustrate a bogie or freight skate 1000 in accordance with aspects of the present invention to illustrate packaging of the various elements in the Bogie or skate 1000. Thus, a battery 1001, a motor 1002, a power electronics module 1003, along with DC/AC converter 1004, a HVAC system control 1005, supervisory control 1006 and other elements are provided. These elements are provided below a substantially planar surface member 1007 for presentation to other parts such as a container as described above. There are cooling systems along with a gear box to axles 1008 and a suspension system 1009. Each axle 1008 may have a brake and a means for regenerative braking,

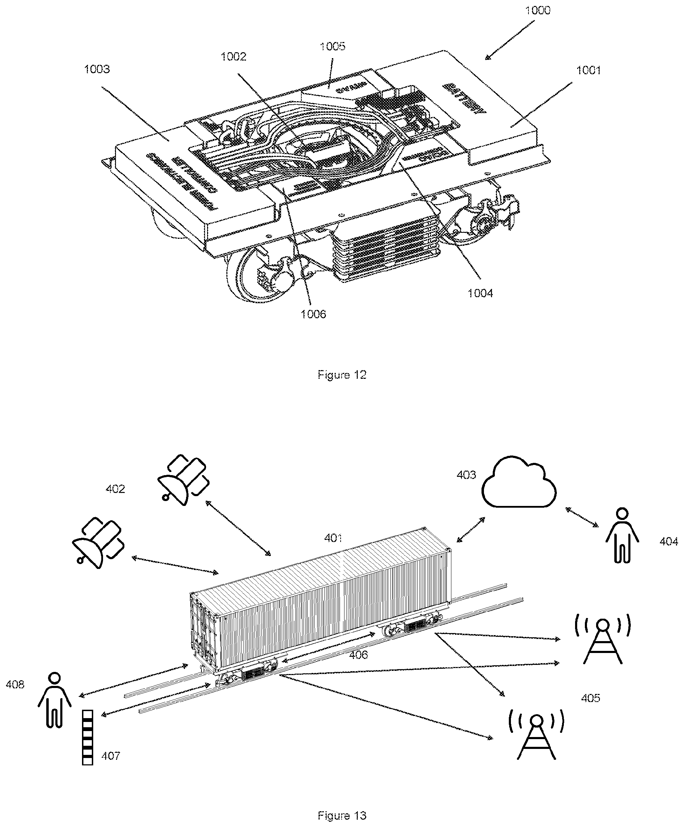

Figure 13 is a schematic illustration of a bogie used as freight skate in accordance with aspects of the present invention as below:
401 A bogie can be used as a one single skate or two bogies or skates working together, each skate with a means to support and retain a container and with accurate position referencing through wheel rotation and external reference systems.
402 Satellite-based Global Positioning for **macro-scale** location (referencing) of each bogie or skate across the field of operation of the skate
403 A 'data cloud' featuring each bogie or skate, and data (for example) the status, battery condition, speed and location, both for interrogating by other software systems and for directing the autonomous bogies or skates to move to another location or carry out any action,
404 A person who may be standing close to the bogie or skate or may be located far away who controls the location, movements and actions of the skate through the 'data cloud'
405 Localised triangulation position referencing system for more accurate macro-scale location (as an alternative to GPS) and as a potential **micro-scale** location system for accurate positioning
406 On-board sensing that can (with appropriate precision) space one bogie or skate relative to another, for example using accurate laser distance measuring, before a container is loaded onto the two bogies or skates
407 An micro-scale bogie or skate positioning technology using trackside or inside-track or localised markers and sensing technology, for example optical, vision, inductive and microwave sensing
408 The sensing means to detect and avoid collisions with other objects or people or animals, linked to the emergency brakes if necessary, one set of sensors in each direction on each skate with immunity to fog and smoke, of which sensing examples include LIDAR (laser imaging, detection, and ranging), vision/imaging, other laser measuring technologies (eg Time of Flight, interferometry), microwave, infra-red, capacitance, sound, vibration and any other movement detection technology

While the invention has been illustrated and described in detail in the drawings and preceding description, such illustration and description are to be considered illustrative or exemplary and not restrictive; the invention is not limited to the disclosed embodiments.

Other variations to the disclosed embodiments can be understood and effected by those skilled in the art in practicing the claimed invention, from a study of the drawings, the disclosure, and the appended claims. Each feature of the disclosed embodiments may be replaced by alternative features serving the same, equivalent or similar provided they fall under the scope of the appended claims and unless stated otherwise. Therefore, unless stated otherwise, each feature disclosed is one example of a generic series of equivalent or similar features.

In the claims, the word "including" does not exclude other elements or steps, and the indefinite article "a" or "an" does not exclude a plurality. Any reference signs in the claims should not be construed as limiting the scope.

## Claims

1. A bogie to allow transit as a vehicle, including:
a bogie support frame including a first portion (111,113) and a second portion (112), the first portion being mountable to form part a vehicle in use;
a suspension system (12) connecting the first portion and second portion;
at least one wheelset (13) mounted on the second portion (112), each wheelset including two or more wheels (131) mounted on a wheel axle (132); whereby there further comprises an actuator (14) for providing torque to the two or more wheels (131),
**characterized in that**
the first portion (113) of the bogie support frame is designated upon which the actuator is mounted and **in that** there further comprises a transmission (15) arranged on the wheel axle and coupled directly to the actuator by means of a flexible coupling portion (142).

2. The bogie of claim 1 wherein the flexible coupling portion (142) further comprises a drive shaft or a flexible connecting portion connecting the actuator to the transmission.

3. The bogie of claim 2, wherein the transmission is mounted to the first portion of the bogie support frame.

4. The bogie of claims 2 or 3, wherein the transmission is mounted along an axial axis of the wheel axle.

5. The bogie of any of claims 2 to 4, wherein the transmission is mounted centrally between two of the two or more wheels.

6. The bogie of any preceding claim, further including a brake assembly.

7. The bogie of claim 6, wherein the brake assembly is mounted along an axial axis of the wheel axle.

8. The bogie of any preceding claim, wherein the second portion of the bogie support frame includes an electrical induction brake.

9. The bogie of any preceding claim wherein the first portion of the bogie support frame is above the suspension system.

10. The bogie of any preceding claim, further including one or more small object deflectors.

11. The bogie of any preceding claim, further including an electrical sensor for monitoring height of the first portion of the bogie relative to a first surface.

12. The bogie of claim 11, further including a controller, the controller including executable instructions to monitor and actuate the suspension system to automatically adjust the height of the first portion of the bogie to a predetermined height relative to the first surface.

13. The bogie as claimed in any preceding claim wherein the first portion of the support frame is provide as a bolster or transverse beam of the support frame particularly designated for the actuator and operation thereof.

14. A bogie as claimed in any preceding claim wherein the bogie provides an independent and separately controlled.

15. A bogie as claimed in claim 14 wherein the bogie includes means for geo-positioning of the bogie.

16. A bogie as claimed in claim 14 or claim 15 wherein the bogie includes a LIDAR system to locate the bogie relative to the vehicle and/or other bogies.

17. A vehicle including two or more bogies according to any preceding claim.

18. A vehicle as claimed in claim 14 wherein the vehicle is a light transit vehicle.

19. A vehicle as claim in claim 15 or claim 16 wherein each bogie has a separate drive mechanism to allow the bogie to be driven independently for movement of the vehicle.

20. A vehicle as claimed in any of claims 16 to 19 in which the vehicle includes a freight container and/or a passenger cabin.

21. A bogie as claimed in any of claims 1 to 16 or a vehicle as claimed in any of claims 17 to 20 in which there is an anti-collision system.

22. A bogie or vehicle as claimed in claim 21 wherein the anti-collision system includes a remote control regime and an onboard regime.

23. A bogie or vehicle as claimed in claim 21 or claim 22 in which the anti-collision system includes sensors for objects.

24. A bogie or vehicle as claimed in claim 23 in which the sensors are associated with the bogie and/or other parts of the vehicle.

25. A bogie or vehicle as claimed in any preceding claim in which the bogie and other parts of a vehicle are separable for charging and/or maintenance.

## Patentansprüche

1. Drehgestell zum Ermöglichen eines Transits als ein Fahrzeug, einschließend:
einen Drehgestellstützrahmen, einschließend einen ersten Abschnitt (111, 113) und einen zweiten Abschnitt (112), wobei der erste Abschnitt montierbar ist, um im Gebrauch einen Teil eines Fahrzeugs zu bilden;
ein Federungssystem (12), das den ersten Abschnitt und den zweiten Abschnitt verbindet;
mindestens einen Radsatz (13), der an dem zweiten Abschnitt (112) montiert ist, wobei jeder Radsatz zwei oder mehr Räder (131) einschließt, die auf einer Radachse (132) montiert sind; wobei ferner ein Aktor (14) zum Bereitstellen eines Drehmoments an die zwei oder mehr Räder (131) umfasst ist,
**dadurch gekennzeichnet, dass**
der erste Abschnitt (113) des Drehgestellstützrahmens bestimmt ist, auf dem der Aktor montiert ist, und dass ferner ein Getriebe (15) umfasst ist, das auf der Radachse eingerichtet ist und mittels eines flexiblen Kupplungsabschnitts (142) direkt mit dem Aktor gekuppelt ist.

2. Drehgestell nach Anspruch 1, wobei der flexible Kupplungsabschnitt (142) ferner eine Antriebswelle oder einen flexiblen Verbindungsabschnitt umfasst, die bzw. der den Aktor mit dem Getriebe verbindet.

3. Drehgestell nach Anspruch 2, wobei das Getriebe an den ersten Abschnitt des Drehgestellstützrahmens montiert ist.

4. Drehgestell nach Anspruch 2 oder 3, wobei das Getriebe entlang einer axialen Achse der Radachse montiert ist.

5. Drehgestell nach einem der Ansprüche 2 bis 4, wobei das Getriebe zentral zwischen zwei der zwei oder mehr Räder montiert ist.

6. Drehgestell nach einem vorhergehenden Anspruch, ferner einschließend eine Bremsanlage.

7. Drehgestell nach Anspruch 6, wobei die Bremsanlage entlang einer axialen Achse der Radachse montiert ist.

8. Drehgestell nach einem vorhergehenden Anspruch, wobei der zweite Abschnitt des Drehgestellstützrahmens eine Wirbelstrombremse einschließt.

9. Drehgestell nach einem vorhergehenden Anspruch, wobei der erste Abschnitt des Drehgestellstützrahmens über dem Federungssystem ist.

10. Drehgestell nach einem vorhergehenden Anspruch, ferner einschließend einen oder mehrere Deflektoren für kleine Objekte.

11. Drehgestell nach einem vorhergehenden Anspruch, ferner einschließend einen elektrischen Sensor zum Überwachen einer Höhe des ersten Abschnitts des Drehgestells in Bezug auf eine erste Oberfläche.

12. Drehgestell nach Anspruch 11, ferner einschließend eine Steuereinheit, wobei die Steuereinheit ausführbare Anweisungen zum Überwachen und Betätigen des Federungssystems einschließt, um die Höhe des ersten Abschnitts des Drehgestells automatisch auf eine vorbestimmte Höhe in Bezug auf die erste Oberfläche zu justieren.

13. Drehgestell nach einem vorhergehenden Anspruch, wobei der erste Abschnitt des Stützrahmens als ein Schemel-oder Querträger des Stützrahmens vorgesehen ist, der insbesondere für den Aktor und dessen Betrieb bestimmt ist.

14. Drehgestell nach einem vorhergehenden Anspruch, wobei das Drehgestell ein unabhängiges und separates gesteuert bereitstellt.

15. Drehgestell nach Anspruch 14, wobei das Drehgestell ein Mittel zur Geolokalisierung des Drehgestells einschließt.

16. Drehgestell nach Anspruch 14 oder Anspruch 15, wobei das Drehgestell ein LIDAR-System einschließt, um das Drehgestell in Bezug auf das Fahrzeug und/oder andere Drehgestelle zu lokalisieren.

17. Fahrzeug, einschließend zwei oder mehr Drehgestelle nach einem vorhergehenden Anspruch.

18. Fahrzeug nach Anspruch 14, wobei das Fahrzeug ein Stadtbahnfahrzeug ist.

19. Fahrzeug nach Anspruch 15 oder Anspruch 16, wobei jedes Drehgestell einen separaten Antriebsmechanismus aufweist, um zu ermöglichen, dass das Drehgestell zur Bewegung des Fahrzeugs unabhängig angetrieben wird.

20. Fahrzeug nach einem der Ansprüche 16 bis 19, in dem das Fahrzeug einen Gütercontainer und/oder einen Fahrgastraum einschließt.

21. Drehgestell nach einem der Ansprüche 1 bis 16 oder Fahrzeug nach einem der Ansprüche 17 bis 20, in dem ein Antikollisionssystem vorliegt.

22. Drehgestell oder Fahrzeug nach Anspruch 21, wobei das Antikollisionssystem ein Fernbedienungsregime und ein Bordregime einschließt.

23. Drehgestell oder Fahrzeug nach Anspruch 21 oder Anspruch 22, in dem das Antikollisionssystem Sensoren für Objekte einschließt.

24. Drehgestell oder Fahrzeug nach Anspruch 23, in dem die Sensoren mit dem Drehgestell und/oder anderen Teilen des Fahrzeugs assoziiert sind.

25. Drehgestell oder Fahrzeug nach einem vorhergehenden Anspruch, in dem das Drehgestell und andere Teile eines Fahrzeugs zum Laden und/oder Warten trennbar sind.

## Revendications

1. Un bogie pour permettre le transport comme un véhicule, incluant :
un cadre de support de bogie incluant une première partie (111, 113) et une deuxième partie (112), la première partie pouvant être montée pour faire partie d'un véhicule en cours d'utilisation ;
un système de suspension (12) connectant la première partie et la deuxième partie ;
au moins un train de roues (13) monté sur la deuxième partie (112), chaque train de roues incluant deux roues ou plus (131) montées sur un essieu de roue (132) ; par quoi est compris en outre un actionneur (14) destiné à fournir un couple aux deux roues ou plus (131),
**caractérisé en ce que**
la première partie (113) du cadre de support de bogie est désignée sur laquelle l'actionneur est monté et **en ce qu'**elle comprend en outre une transmission (15) agencée sur l'essieu de roue et couplée directement à l'actionneur au moyen d'une partie de couplage flexible (142).

2. Bogie selon la revendication 1, dans lequel la partie de couplage flexible (142) comprend en outre un arbre d'entraînement ou une partie de connexion flexible connectant l'actionneur à la transmission.

3. Bogie selon la revendication 2, dans lequel la transmission est montée sur la première partie du cadre de support de bogie.

4. Bogie selon les revendications 2 ou 3, dans lequel la transmission est montée le long d'un axe axial de l'essieu de roue.

5. Bogie selon l'une quelconque des revendications 2 à 4, dans lequel la transmission est montée de manière centrale entre deux des deux roues ou plus.

6. Bogie selon l'une quelconque des revendications précédentes, incluant en outre un ensemble de frein.

7. Bogie selon la revendication 6, dans lequel l'ensemble de frein est monté le long d'un axe axial de l'essieu de roue.

8. Bogie selon l'une quelconque des revendications précédentes, dans lequel la deuxième partie du cadre de support de bogie inclut un frein à induction électrique.

9. Bogie selon l'une quelconque des revendications précédentes dans lequel la première partie du cadre de support de bogie est au-dessus du système de suspension.

10. Bogie selon l'une quelconque des revendications précédentes, incluant en outre un ou plusieurs déflecteurs de petits objets.

11. Bogie selon l'une quelconque des revendications précédentes, incluant en outre un capteur électrique destiné à surveiller la hauteur de la première partie du bogie par rapport à une première surface.

12. Bogie selon la revendication 11, incluant en outre un dispositif de commande, le dispositif de commande incluant des instructions exécutables pour surveiller et actionner le système de suspension pour ajuster automatiquement la hauteur de la première partie du bogie à une hauteur prédéterminée par rapport à la première surface.

13. Bogie selon l'une quelconque des revendications précédentes dans lequel la première partie du cadre de support est fournie comme une traverse ou une poutre transversale du cadre de support conçue en particulier pour l'actionneur et le fonctionnement de celui-ci.

14. Bogie selon l'une quelconque des revendications précédentes dans lequel le bogie fournit un indépendant et commandé de manière séparée.

15. Bogie selon la revendication 14 dans lequel le bogie inclut un moyen de géolocalisation du bogie.

16. Bogie selon la revendication 14 ou la revendication 15 dans lequel le bogie inclut un système LiDAR pour localiser le bogie par rapport au véhicule et/ou à d'autres bogies.

17. Véhicule incluant deux bogies ou plus selon l'une quelconque des revendications précédentes.

18. Véhicule selon la revendication 14 dans lequel le véhicule est un véhicule de transport léger.

19. Véhicule selon la revendication 15 ou la revendication 16 dans lequel chaque bogie a un mécanisme d'entraînement distinct pour permettre au bogie d'être entraîné indépendamment pour le déplacement du véhicule.

20. Véhicule selon l'une quelconque des revendications 16 à 19 dans lequel le véhicule inclut un conteneur de fret et/ou une cabine de passagers.

21. Bogie selon l'une quelconque des revendications 1 à 16 ou véhicule selon l'une quelconque des revendications 17 à 20 dans lequel il y a un système anticollision.

22. Bogie ou véhicule selon la revendication 21 dans lequel le système anticollision inclut un régime télécommandé et un régime embarqué.

23. Bogie ou véhicule selon la revendication 21 ou la revendication 22 dans lequel le système anticollision inclut des capteurs pour des objets.

24. Bogie ou véhicule selon la revendication 23 dans lequel les capteurs sont associés avec le bogie et/ou d'autres parties du véhicule.

25. Bogie ou véhicule selon l'une quelconque des revendications précédentes dans lequel le bogie et d'autres parties d'un véhicule sont séparables pour le chargement et/ou l'entretien.
